# EUROPEAN PATENT APPLICATION

(11) **EP 2 606 960 A1**
(43) Date of publication of application: **26.06.2013**
(21) Application number: 11306723.5
(22) Date of filing: 21.12.2011
(51) Int. Cl.: B01J 21/00, B01J 21/16, B01J 23/00, B01J 23/58, B01J 27/236, B01J 37/00, B01J 37/06, B01J 37/08, B01J 37/18, C01B 3/32, C01F 7/00

(54) **Rhodium catalysts for ethanol reforming**

(71) Applicant: L'Air Liquide Société Anonyme pour l'Etude et l'Exploitation des Procédés Georges Claude, 75007 Paris (FR)
(72) Inventor: Gary, Daniel, 78180 Montigny le Bretonneux (FR); Del-Gallo, Pascal, 91410 Dourdan (FR); Basile, Francesco, 88063 Catanzaro (IT); Vaccari, Angelo, 40127 Bologna (IT); Fornasari, Giuseppe, 40141 Bologna (IT); Bersani, Irene, 40054 Budrio (IT)
(74) Representative: Beroud, Amandine

(57) **Abstract**

Hydrotalcite-like compound of the formula (I):
[RhₓMg_{y}Al_{w}(OH)₂]^{(3x+2y+3w-2)+}(A²⁻)_{(3x+2y+3w-2)/2}, k H₂O (I);
catalyst synthesis process involving such a compound and the use of this catalyst for hydrocarbons reforming and for ethanol reforming.

## Description

The invention relates to new catalysts and their use for the production of synthesis gas.

Since a few decades, increasing attention is being paid to the utilization of biomass derived products as renewable energy source. The interest is due to the possibilities to replace oil with a raw material, potentially leading to zero emission of carbon dioxide CO2 (20-20-20 Renewable Energy UE Directive, 23/01/08, concerning the European Energy Policy and the Kyoto's Protocol). Of great interest is the possibility to produce hydrogen and synthesis gas by ethanol and other oxygenated reforming to be used, as example, in high efficiency fuel cell [F.Aupretre et al., Catal. Communications (2002) (3) 263-267; J. Armor; Appl. Catal. A: General (1999), 176, 159; Dunn S.; Int J. Hydrogen Energy (2002), 27(3), 235-264].

Among the oxygenate compounds, ethanol is a good candidate for several reasons:
(i) - It is produced through carbohydrates fermentation;
(ii) - It could easily be decomposed in the presence of water to generate a hydrogen-rich mixture;
(iii) - It is free from catalyst poisons such as sulfur.

However, the presences of two carbon atoms and of oxygen lead possible several reactions. The reaction pathway are much more complex than that of methane and ethane partial oxidation and reforming and even more complex than that of methanol, therefore it is very important the role of the catalyst, of the support and their interaction able to select a specific reaction pattern maximizing the hydrogen selectivity at relatively low temperature [A. Haryanto et al.; Energy & Fuels (2005) 19, 2098-2106].

The reaction of steam reforming of ethanol is, from a thermodynamic point of view, feasible above 500 K and at low temperature. It is strongly endothermic in absence of oxygen.

Different catalytic system have been studied in this reaction using different metals and various supports, but often a low comprehension about the specificity of each material and the interaction with the support is reported. From these studies it can be evidenced that good catalysts for ethanol steam reforming are supported metals like Co, Ni, Rh, Ru, Pd, Ir and Pt. Most of them promote the dehydrogenation to acetaldehyde and prevent the dehydration to ethylene.

However, at a certain level of temperature, these metals decompose the organic substrate to C* and H* (dissociative adsorption), getting close to thermodynamic equilibrium and giving problems in the effective evaluation of the catalysts selectivity. The coke formation has very often been observed on the surface of the catalysts. The coke formation is even more problematic if the process is carried out with raw ethanol and/or high pressure. Both conditions not only are required for the development of an industrial process and outstanding scientific challenge. Therefore, using these conditions, the possibility to run a process at low temperature with a selective reaction pathway is determinant to inhibit the intermediate which are coke precursors. In particular, the presence of other oxygenated impurities in the raw ethanol (such as butanol or diethylether) can form olefins and promote the coke formation. The study of these effects allows extend the results at different organic substrate of biological origin.

Although the formation of coke at low temperature is still a problem on this catalyst, it can be inhibited through the support modification and the metal support interaction. Recently, structured catalysts based in cobalt and zinc oxide supported on cordierite monoliths and macroporous silicon have been studied. The study of the reaction pathway and the reaction intermediates of the steam ethanol reforming revealed that ethanol and acetaldehyde compete for the same active sites and that water and methane conversion depend on ethanol conversion since water and methane, reaction intermediate, are adsorbed on the same active sites than ethanol. The nature of the active sites greatly modify the catalytic activity, in particular a support with both strong or weak acidic sites mainly favors the C-C breakage and therefore the formation of CO and CHₓ, while the presence of only acidic sites favors the acetaldehyde formation.

Few studies are focused on the combined effect of metal and support or the combination in bimetallic catalysts and several aspects of the process are still little understood. Nevertheless, the scientific community agrees that the control of activity and selectivity need to be faced through studies involving the preparation of materials able to tailor the metal support interaction and the chemical environment in the nano-structure. To obtain such materials it is necessary to develop a new approach allowing control the dispersion of the active phase from the first stages of the preparation leading to active sites strongly interacting with the support.

The innovative approach is related to the insertion of the noble metal inside a well defined crystalline structure prepared in the way to give rise to the noble metal dispersed, like in a solid solution, inside an oxide matrix. One of the most promising methods is related to the insertion of metallic cations of active phase inside an hydrotalcite type structure. Recent studies have demonstrated that it is possible to obtain a noble metal dispersed on the surface by a reduction process. Catalysts obtained with this method have shown to be active in the partial oxidation and steam reforming of methane to synthesis gas without strong deactivation during reaction conditions.

The invention is related to the possibility to obtain high activity, selectivity and stability of the Rh° obtained by reduction of specific phase distribution of mixed oxides in which the Rh³⁺ is present after calcination of hydrotalcite precursor. The catalysts are obtained from the hydrotalcite structure containing Rh, Mg, Al and having carbonate or silicate as interlayer anions and in the way to obtain a specific phase distribution and an high Rh dispersion after the high temperature reduction treatment.

Recent studies have demonstrated that it is possible to obtain a noble metal dispersed on the surface by a reduction process. Catalysts obtained with this method have shown to be active in the transformation of methane to synthesis gas without deactivation during reaction conditions. Nevertheless the activity of the best catalyst used in the methane reforming are not suitable catalyst in this reaction due to the metal support interaction, to the structure sensitiveness of the reaction and to the catalyst stability.

That is the reason why the invention concerns new catalysts with enhanced performances in terms of activity, selectivity and stability towards hydrogen and carbon monoxide formation, which are active in a wide range of temperature and which generates C2 by-products in a very low amount. These catalysts are based on hydrotalcite precursor containing rhodium, both using carbonate or silicate as interlayer anions and having a specific phase distribution after calcination and a high Rhodium dispersion after the high temperature reduction treatment. The catalysts are active and selective at low temperature (500°C) with 100% selectivity in C1 products, with no formation of by product. The catalysts are active and stable at higher temperature and need low residence time reaching equilibrium value below 50 ms at 550°C.

According to a first embodiment the invention concerns an Hydrotalcite-like compound of the formula (I):

[Rhₓ Mg_{y}Al_{w} (OH)₂]^{(3x+2y+3w-2)+}(A²⁻)_{(3x+2y+3w-2)/2}, k H₂O (I)

wherein:
- (A²⁻) represents either a carbonate anion or a silicate anion,
- x > 0,
- y > 0,
- w > 0,
- (x+y) = (1-w),
- 1 ≤ [y/(w+x)] ≤ 4, and
- 1/100 ≤ x/w ≤ 5/100.

According to a particular embodiment, in the formula (I) as hereinabove defined, 0.5 ≤ y < 0.9.

According to another particular embodiment, in the formula (I) as hereinabove defined, 0.1 ≤ w ≤ 0.4.

According to another particular embodiment, in the formula (I) as hereinabove defined, the atomic ratio: [y/(w+x)] ≥ 2.

Examples of such Hydrotalcite-like compounds are those of the following formulas:

[Rh_{0.0055}Mg_{0.6800}Al_{0.3145}(OH₂]^{0.32+}(A²⁻)_{0.16} k H₂O,

[Rh_{0.0050}Mg_{0.8000}Al_{0.1950}(OH)₂]^{0.20+}(A²⁻)_{0.10} k H₂O,

[Rh_{0.0043}Mg_{0.6800}Al_{0.3157}(OH)₂]^{0.32+}(A²⁻)_{0.16} k H₂O,

[Rh_{0.0043}Mg_{0.8000}Al_{0.1957}(OH)₂]^{0.20+}(A²⁻)_{0.10} k H₂O.

According to more particular embodiment, hydrotalcite-like compounds are those of the following formulas:

[Rh_{0.0043}Mg_{0.6800}Al_{0.3157}(OH)₂]^{0.32+}(CO₃²⁻)_{0.16} k H₂O,

[Rh_{0.0043}Mg_{0.8000}Al_{0.1957}(OH)₂] (SiₙO₂ₙ₊₁²⁻)_{0.1} k H₂O.

The invention relates to a synthesis process of the Hydrotalcite-like compound of the formula (I) hereinabove defined, comprising the following steps:
- A step A during which an aqueous solution containing together, aluminium nitrate, rhodium nitrate and aluminium nitrate is prepared by mixing said nitrate salts in the desired molar proportions, with water;
- A step B during which, said solution obtained at step A is mixed with an aqueous solution of sodium carbonate or sodium silicate, the pH being maintained between 8 and 10, preferably around 9, to produce a precipitate;
- A step C during which, said precipitate obtained at step B, is isolated by filtration, washed and then dried to form the expected hydrotalcite-like compound of said formula (I).

The synthesis process as hereinabove defined may further comprise:
- A step D during which, said hydrotalcite-like compound of said formula (I) as hereinabove defined, obtained at step C, is grinded to form a powder of particles of said hydrotalcite-like compound of said formula (I).

The invention also relates to a synthesis process of a catalyst comprising :
- A step F during which, the powder obtained at step D of the hereinabev defined process, is calcined.

The synthesis process of a catalyst as herein above defined, may further comprises :
- A step G during which, the calcined powder obtained at step F is reduced with hydrogen at a temperature preferentially below 230°C.

According to another embodiment, the invention concerns a catalyst consisting in a combination of rhodium (Rh), magnesium oxide (MgO), mixed magnesium and aluminium oxide (MgAl₂O₄), and optionally mixed magnesium and silicon oxide (Mg₂SiO₄), and obtainable by the process as hereinabove defined, wherein:
- The molar ratio MgO/MgAl₂O₄ in said combination is less than or equal to 2 and greater or equal to 1,
- The molar concentration of MgAl₂O₄ is greater or equal to 30mole % and less or equal to 50mole %
- The sum of the molar concentrations of MgO and Mg₂SiO₄ is greater or equal to 40mole% and less or equal to 90mole% and
- The molar concentration of rhodium in said combination is greater or equal to 10⁻³ mole% and less or equal to 10⁻² mole%.

The invention also concerns a synthesis process for the preparation of the catalyst as hereinabove defined, comprising the following steps:
- A step A during which an aqueous solution containing together, aluminium nitrate, rhodium nitrate and aluminium nitrate is prepared by mixing said nitrate salts in the desired molar proportions, with water;
- A step B during which, said solution obtained at step A is mixed with an aqueous solution of sodium carbonate or sodium silicate, the pH being maintained between 8 and 10, preferably around 9, to produce a precipitate;
- A step C during which, said precipitate obtained at step B, is isolated by filtration, washed and then dried to form the expected hydrotalcite-like compound of said formula (I);
- A step D during which, said hydrotalcite-like compound of said formula (I) as hereinabove defined, obtained at step C, is grinded to form a powder of particles of said hydrotalcite-like compound of said formula (I);
- A step F during which, the powder obtained at step D, is calcined;
- A step G during which, the calcined powder obtained at step F is reduced with hydrogen at a temperature of less than 230°C.

The invention also concerns the Use of said catalysts, as a catalyst for hydrocarbons reforming and/or as a catalyst for ethanol reforming.

The following paragraphs disclose non-limitative examples of catalysts according to the present invention.

The invention is related to the preparation of an active selective and stable catalyst, by insertion of metallic cations as active phase inside an hydrotalcite type precursor, from which the catalyst can be obtained by calcination at a temperature between 750°C and 1000°C and reduction between 700 and 900°C.

Surprisingly among the 4 catalysts prepared with 1,0 wt.% of Rh the catalyst obtained by calcination and reduction of the Rh/Mg/Al 0,5/80/19,5 a.r. hydrotalcite with silicate as interlayer anion (R05M80A) and the Rh/Mg/Al 0,43/68/31,57 a.r. with carbonate (R043MA) are active and selective while the catalyst obtained by hydrotalcite with Rh/Mg/Al/ 0.55/68/31,45 with carbonate as interlayer (R055MA) is poorly selective while the Rh/Mg/Al 0.43/80/19,5 with silicate as interlayer anion (R043M80A) is poorly active and selective towards hydrogen and synthesis gas.

The composition of hydrotalcites is summarized in the following

**Table 1**

| | **R055M** | **R05M80A** | **R043MA** | **R043M80A** |
|---|---|---|---|---|
| **Mg** | 68 | 80 | 68 | 80 |
| **Al** | 31.45 | 19.50 | 31.57 | 19.57 |
| **Rh** | 0.55 | 0.50 | 0.43 | 0.43 |
| **Anions** | Silicates | Silicates | Carbonates | Carbonates |

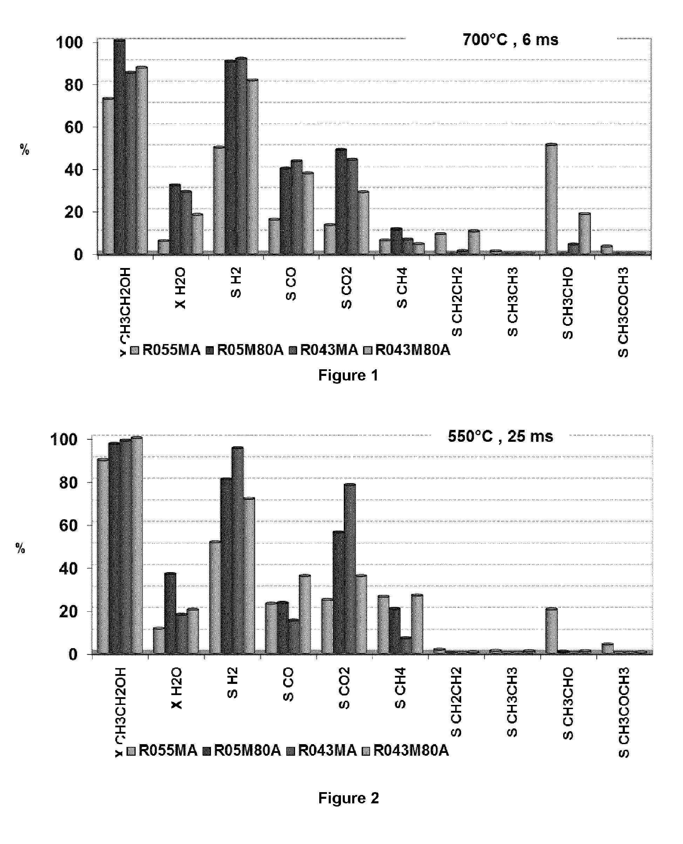

The activity and selectivity of the 4 hydrotalcite (HT)-derived catalysts are reported in **Figure 1** and **Figure 2**, that clearly show that samples R05M80A and R043MA are the best combination in terms of activity and selectivity at 550°C and 700°C.

**Figure 1** shows the activity and selectivity of each of the catalysts R055M, R05M80A, R043MA, and R043M80A in an ethanol reforming test, at atmospheric pressure, with a residence time of 6ms at a temperature = 700°C with a steam/ethanol ratio = 5.

**Figure 2** shows the activity and selectivity of each of the catalysts R055M, R05M80A, R043MA, and R043M80A in an ethanol reforming test, at atmospheric pressure, with a residence time of 25 ms, at a temperature = 550°C with a steam/ethanol ratio = 5.

The selectivity is maximum in the synthesis gas product and minimum in C2 and C3 products, which are coke precursors. In fact, no carbon formation on the catalysts has been observed at low C2⁺ selectivity.

Even more clearly are the specificity of the two R043MA and R05M80A catalysts if the catalyst selectivities are compared at similar conversion.

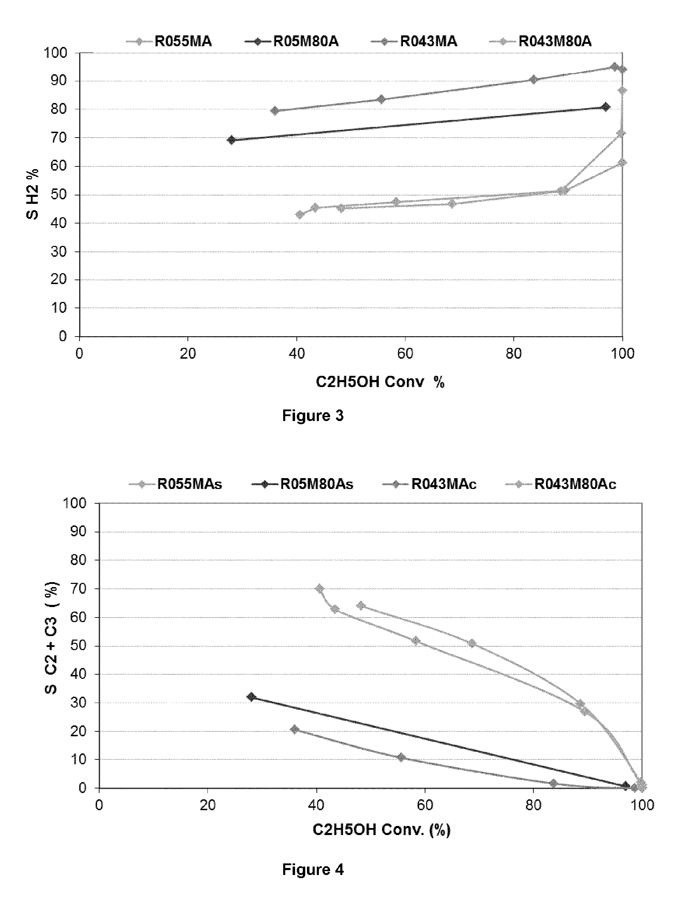

The selectivity in hydrogen is reported in **Figure 3** and the selectivity in C2 and C3 products are reported in **Figure 4****,** as a function of the ethanol conversion for each of the catalysts R055M, R05M80A, R043MA, and R043M80A. The graphs clearly show two different to better enhance the specific selectivity of the catalyst through hydrogen.

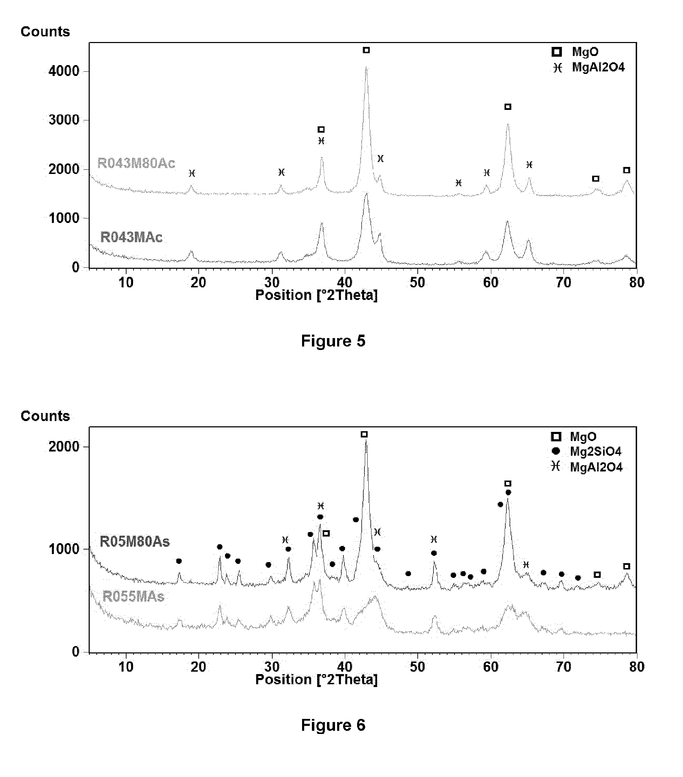

The diffraction patterns of the calcined catalysts **(****Figure 5** and **Figure 6****)** show that, by increasing the Mg/Al, together with the expected increase in the intensity of the MgO phase diffraction lines, the amount of spinel phase decreases. Moreover, the crystalloid of the forsterite phase for the 80/20 is lower. It is worth noting that by reducing the amount of trivalent cations, the charge excess of the hydroxyl layers decreases, as does the silicate content in the structure in order to balance it.

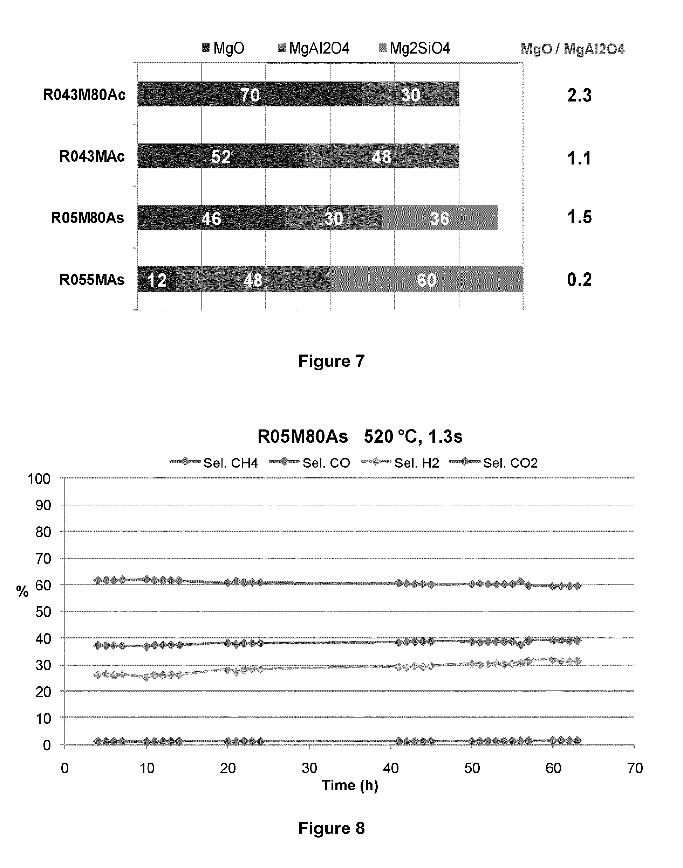

The hypothesis of the phase composition of the matrix containing the active phase are summarized in **Figure 7****.** Excluding the forsterite phase which does not contains Rh, it is clear that the two active catalysts have similar composition in terms of MgO/MgAl₂O₄ related to an optimal Rh distribution in the matrix, in a specific metal support interaction and in specific acid base properties.

The previous catalysts have been tested at temperature between 500 and 600°C showing optimal stability with time on stream. The tests carried out for a period of 65h demonstrate the stability of the performances of the R05M80S with time on stream even using Surfin grade ethanol (commercial grade). The tests show an increase of the methane conversion and Hydrogen selectivity while the ethanol conversion is maintained to 100%. **Figure 8** reports the stability tests in ethanol reforming carried out using surfin ethanol at T = 520°C, P = 20 10⁵ Pa (20 bar), with a EtOH/Steam ratio = 1/5 and a residence time = 1.2 s.

## Claims

1. Hydrotalcite-like compound of the formula (I):
[RhₓMg_{y}Al_{w}(OH)₂]^{(3x+2y+3w-2)+}(A²⁻)_{(3x+2y+3w-2)/2}, k H₂O (I)
wherein:
- (A²⁻) represents either a carbonate anion or a silicate anion,
- x > 0,
- y > 0,
- w > 0,
- (x+y) = (1-w),
- 1 ≤ [y/(w+x)] ≤ 4, and
- 1/100 ≤ x/w ≤ 5/100.

2. Hydrotalcite-like compound of the formula (I) according to Claim 1 wherein 0.5 ≤ y < 0.9.

3. Hydrotalcite-like compound of the formula (I) according to anyone of Claims 1 or 2, wherein 0.1 ≤ w ≤ 0.4.

4. Hydrotalcite-like compound of the formula (I) according to anyone of Claims 1 to 3, wherein the atomic ratio: [y/(w+x)] ≥ 2.

5. Hydrotalcite-like compound according to anyone of Claims 1 to 5, of the following formulas:
[Rh_{0.0055}Mg₀.₆₈₀₀Al_{0.3145}(OH)₂]^{0.32+}(A²⁻)_{0.16} k H₂O,
[Rh₀.₀₀₅₀Mg_{0.8000}Al_{0.1950}(OH)₂]^{0.20+}(A²⁻)_{0.10} k H₂O,
[Rh_{0.0043}Mg_{0.6800}Al_{0.3157}(OH)₂]^{0.32+}(A²⁻)_{0.16} k H₂O,
[Rh_{0.0043}Mg_{0.8000}Al_{0.1957}(OH)₂]^{0.20+}(A²⁻)_{0.10} k H₂O.

6. Hydrotalcite-like compound according to Claim 5, of the following formulas:
[Rh_{0.0043}Mg_{0.6800}Al_{0.3157}(OH)₂]^{0.32+}(CO₃²⁻)_{0.16} k H₂O,
[Rh_{0.0043}Mg_{0.8000}Al_{0.1957}(OH)₂]^{0.20+}(SiₙO₂ₙ₊₁²⁻)_{0.1} k H₂O.

7. Synthesis process of the Hydrotalcite-like compound of the formula (I) according to anyone of Claims 1 to 6, comprising the following steps:
- A step A during which an aqueous solution containing together, aluminium nitrate, rhodium nitrate and aluminium nitrate is prepared by mixing said nitrate salts in the desired molar proportions, with water;
- A step B during which, said solution obtained at step A is mixed with an aqueous solution of sodium carbonate or sodium silicate, the pH being maintained between 8 and 10, preferably around 9, to produce a precipitate;
- A step C during which, said precipitate obtained at step B, is isolated by filtration, washed and then dried to form the expected hydrotalcite-like compound of said formula (I).

8. Synthesis process according to Claim 7, further comprising: a step D during which, said hydrotalcite-like compound of said formula (I) as hereinabove defined, obtained at step C, is grinded to form a powder of particles of said hydrotalcite-like compound of said formula (I).

9. Synthesis process of a catalyst comprising a step F during which, the powder obtained at step D of the processe according to Claim 8, is calcined;

10. Synthesis process according to Claim 9, further comprising a step G during which, the calcined powder obtained at step F is reduced with hydrogen at a temperature of preferentially below 230°C.

11. Catalyst consisting in a combination of rhodium (Rh), magnesium oxide (MgO), mixed magnesium and aluminium oxide (MgAl₂O₄), and optionally mixed magnesium and silicon oxide (Mg₂SiO₄), and obtainable by the process according to Claim 10,wherein:
- The molar ratio MgO/MgAl₂O₄ in said combination is less than or equal to 2 and greater or equal to 1,
- The molar concentration of MgAl₂O₄ is greater or equal to 30mole % and less or equal to 50mole %
- The sum of the molar concentrations of MgO and Mg₂SiO₄ is greater or equal to 40mole% and less or equal to 90mole% and
- The molar concentration of rhodium in said combination is greater or equal to 10⁻³ mole% and less or equal to 10⁻² mole%.

12. Synthesis process for the preparation of the catalyst according to Claim 11, comprising the following steps:
- A step A during which an aqueous solution containing together, aluminium nitrate, rhodium nitrate and aluminium nitrate is prepared by mixing said nitrate salts in the desired molar proportions, with water;
- A step B during which, said solution obtained at step A is mixed with an aqueous solution of sodium carbonate or sodium silicate, the pH being maintained between 8 and 10, preferably around 9, to produce a precipitate;
- A step C during which, said precipitate obtained at step B, is isolated by filtration, washed and then dried to form the expected hydrotalcite-like compound of said formula (I) ;
- A step D during which, said hydrotalcite-like compound of said formula (I) as hereinabove defined, obtained at step C, is grinded to form a powder of particles of said hydrotalcite-like compound of said formula (I);
- A step F during which, the powder obtained at step D, is calcined;
- A step G during which, the calcined powder obtained at step F is reduced with hydrogen at a temperature preferentially below than 230°C.

13. Use of the catalyst prepared by the process according to Claim 10, as a catalyst for hydrocarbons reforming.

14. Use of the catalyst according to Claim 11, as a catalyst for ethanol reforming.
